# EUROPEAN PATENT SPECIFICATION

(11) **EP 2 577 188 B1**
(45) Date of publication and mention of the grant of the patent: **25.12.2019**
(21) Application number: 11709856.6
(22) Date of filing: 16.03.2011
(51) Int. Cl.: F25B 41/00, F04B 39/00, F01N 1/22, F04B 53/00, F04C 29/00, F04C 29/06, F04C 18/16, F16L 55/04

(54) **PULSATION CANCELLATION**
PULSATIONSUNTERDRÜCKUNG
SUPPRESSION DES IMPULSIONS

(30) Priority: 01.06.2010 US 350101 P
(43) Date of publication of application: 10.04.2013
(73) Proprietor: Carrier Corporation, Farmington, CT 06034-4015 (US)
(72) Inventor: SIEGERT, Jan, 55118 Mainz (DE)
(74) Representative: Dehns
(86) International application number: PCT/US2011/028614
(87) International publication number: WO 2011/152915

(56) References cited:
- WO-A2-2006/062741
- DD-A1- 264 257
- DE-A1- 2 346 382
- DE-C- 87 187
- JP-A- 2008 008 604
- JP-A- 2008 032 243
- US-A1- 2003 066 288
- US-A1- 2008 093 162

## Description

### BACKGROUND

The disclosure relates to refrigeration. More particularly, the disclosure relates to sound suppression in refrigeration systems.

Refrigeration systems (broadly including air conditioners, heat pumps, chillers, and other systems) have long suffered from generation of adverse levels of sound. A wide variety of mufflers have been proposed.

A typical refrigeration system includes one or more compressors which cyclically expose a volume to suction conditions, close off that volume, compress that volume, and open the compressed volume to discharge conditions. One example is a screw compressor wherein intermeshed rotors define the compression volumes as compression pockets between the rotors. In a reciprocating compressor, the compression volumes are defined by the compressor's cylinders. As each volume opens to the discharge conditions, a pulse will be created. Frequency of pulse generation depends on compressor speed combined with the number of cylinders or the numbers of lobes on the intermeshed rotors. Other considerations including system geometry and the type and condition of refrigerant will influence wave propagation associated with these pulsations.

Although the opening of compression volumes to the discharge conditions is a principal source of pulsation, there are other sources including the closing of such volumes at discharge and the opening and closing of the volumes at the suction conditions. A variety of sound cancelation systems have been proposed. Two examples are seen in US2005/0194207A1 of Nemit, Jr. et al. and US2006/0127235A1 of Shoulders.

DD 264 257 discloses a damping device as in the pre-characterising portion of claim 1.

DE 23 46 382 discloses a pressure surge damper wherein the compression of a spring acting on a bellows is controlled via a screw mechanism.

WO 2006/062741 discloses a compressor sound suppression system having a plug arranged in a branch portion of the system. The plug is sized and positioned to provide tuning and to attenuate particular pressure pulsations within the system.

US 2003/066288 discloses an acoustic device for improving intake and exhaust sounds of an internal combustion engine. An inlet pipe has a sound amplifying chamber having a length that is variable by way of a moveable member mounted on a screw mechanism.

US 2008/093162 discloses a gas flow sound attenuation device having a Helmholtz chamber installed in axial alignment with upstream gas flow.

### SUMMARY

Accordingly, one aspect of the disclosure involves a pulsation-canceling conduit assembly. The assembly has a first conduit leg. A second conduit leg extends from a junction with the first conduit leg. A first branch extends from the junction opposite the first conduit. A first member is axially displaceable along the first branch to define an effective volume of the first branch. The first member is axially displaceable along the first branch via a screw mechanism. The screw mechanism includes an external actuator handle so that rotation of the handle in first and second rotational directions respectively decreases and increases the effective volume.

The first conduit leg may have a port distally of the junction and at a right angle to the length of the first conduit leg. The first conduit leg may have a length 150-250% of a nominal length of the first branch. The assembly may further include a second branch extending from the junction opposite the second conduit and a second member axially displaceable within the second branch to define an effective volume of the second branch. The first branch and first conduit may be coaxial and the second branch and second conduit may be coaxial. The first and second branches may be at right angles to each other. The first conduit may have an inlet upstream at a first end of and essentially normal to a length of a main portion of the first conduit. The second conduit may have an outlet downstream at a first end of and essentially normal to a length of a main portion of the second conduit.

The assembly is used in a refrigeration system including a compressor. A first heat exchanger is downstream of the compressor along a refrigerant flowpath. An expansion device is downstream of the first heat exchanger along the refrigerant flowpath. A second heat exchanger is downstream of the expansion device along the refrigerant flowpath and upstream of the compressor along the refrigerant flowpath. The assembly may be located along the refrigerant flowpath (e.g., between the compressor and the first heat exchanger).

The refrigeration system may be operated by operating the compressor to compress a refrigerant flow and drive the refrigerant flow along the refrigerant flowpath sequentially through the first heat exchanger, expansion device, and second heat exchanger, to return to the compressor. A pulsation parameter may be measured. A position of the first member may be adjusted so as to reduce the measured pulsation parameter.

The assembly may further comprise a second branch and a second member. The adjusting may comprise adjusting both said position of said first member and a position of said second member.

The assembly may be used by passing a fluid sequentially through the first conduit, the junction, and the second conduit. A pulsation parameter may be measured. A position of the first member may be adjusted so as to reduce the pulsation parameter.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic view of a first prior art refrigeration system.
FIG. 2 is a view of a modified system including a first pulse cancelation assembly.
FIG. 3 is a sectional view of the pulse cancelation assembly of the system of FIG. 2.
FIG. 4 is a view of a modified system including a second pulse cancelation assembly.
FIG. 5 is a sectional view of the pulse cancelation assembly of a refrigeration system according to the invention.

Like reference numbers and designations in the various drawings indicate like elements.

### DETAILED DESCRIPTION

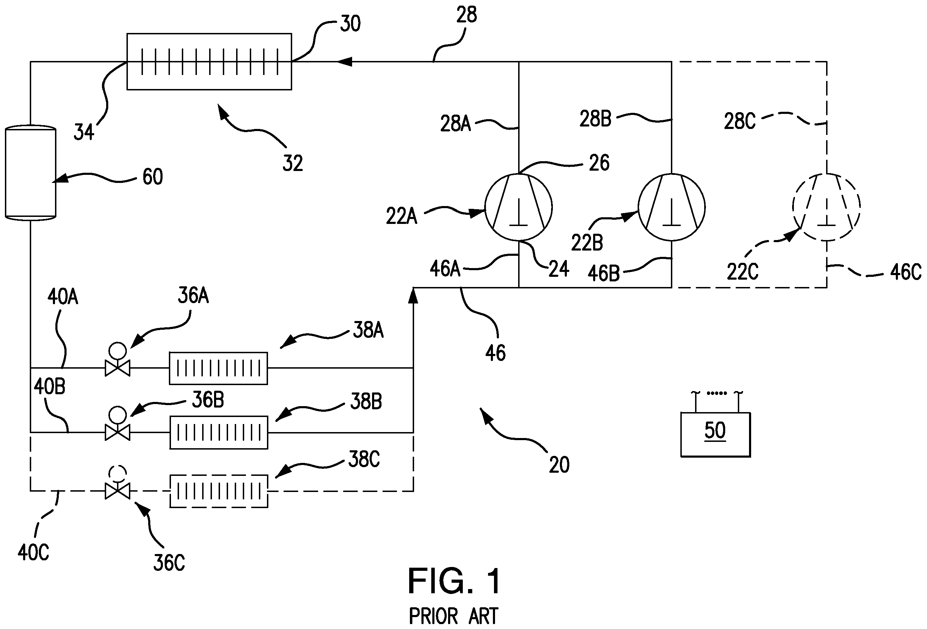

FIG. 1 shows a baseline exemplary refrigeration system 20 which can serve as an exemplary baseline for modifications in view of the present disclosure. However, an essentially infinite number of other systems may also serve as the baseline. The baseline system has one or more compressors. The illustrated system includes a plurality of compressors 22A-22C coupled in parallel, although other arrangements are possible. The last compressor is shown in broken line to illustrate the ability to have an unspecified number of compressors in such a configuration. Each of the compressors has a suction port (inlet) 24 and a discharge port (outlet) 26. The discharge ports feed refrigerant to a discharge line 28 (e.g., via branches (roots) 28A-28C, respectively). The discharge line, in turn, feeds the inlet 30 of a first heat exchanger 32 having an outlet 34. In a normal mode of operation, the first heat exchanger 32 is a heat rejection heat exchanger (a condenser or gas cooler; hereafter collectively both "condenser" for ease of reference). A condenser discharge line from the outlet 34 may feed refrigerant to one or more expansion devices 36A-36C. Therefrom, refrigerant may be fed to one or more second heat exchangers (heat rejection heat exchangers or evaporators). As with the illustrated parallel compressors, the particular FIG. 1 baseline includes a plurality of evaporators 38A-38C in parallel, each with an associated expansion device along a respective refrigerant line branch 40A-40C. Exemplary expansion devices are electronic expansion valves which may be controlled by a control system 50 (e.g., having a controller system, a microcontroller, or microprocessor programmed to control system operations). The branches 40A-40C merged into a suction line 46 which, in turn, branches into separate branches 46A-46C feeding the respective compressor inlets.

The exemplary system of FIG. 1 also includes an accumulator 60 downstream of the condenser and upstream of the expansion devices in the normal mode of operation.

The portion of the refrigerant flowpath between the compressors and the condenser has historically been an area of attention regarding sound generation.

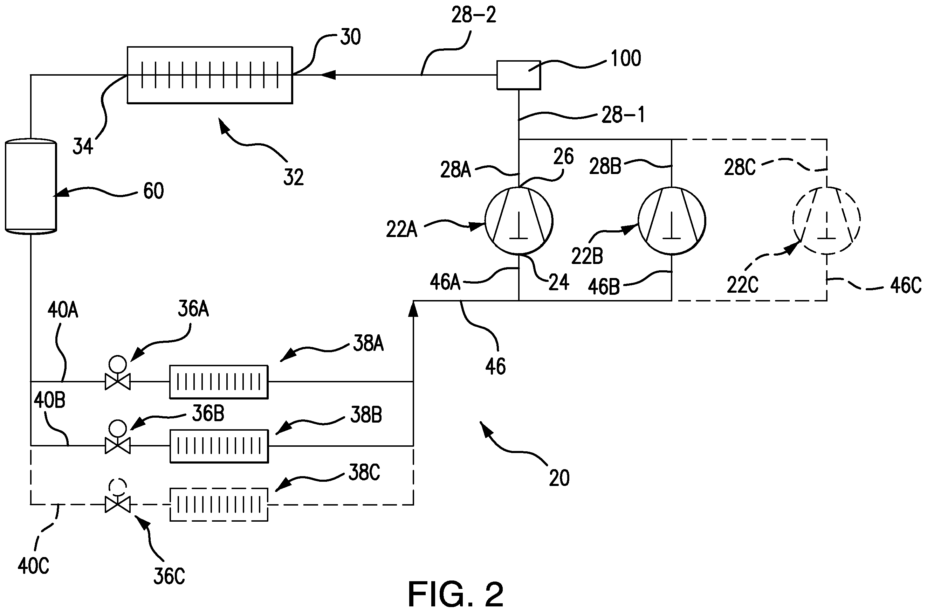

FIG. 2 shows the modification of the baseline system via the addition of a single pulsation cancelation assembly 100. As is discussed further below, the modification involves locating the assembly 100 at a 90° turn in the refrigerant flowpath. If this turn does not previously exist, it may be added. The exemplary means 100 is located at a junction of legs 28-1 and 28-2 of the discharge line.

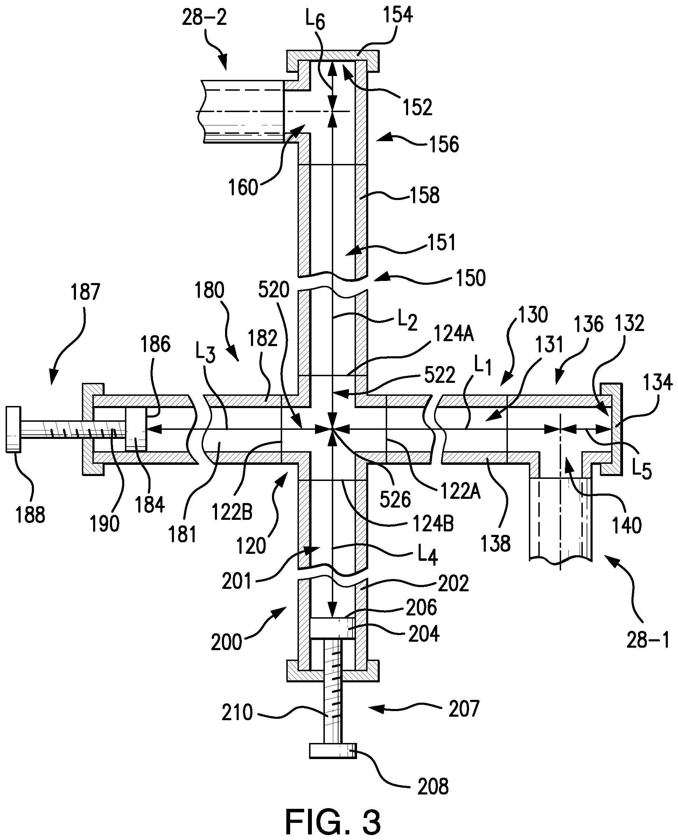

FIG. 3 shows an exemplary such means 100 formed as a conduit assembly. The exemplary assembly may be formed using conventional piping/tubing and fittings of the same type as used in the baseline system. As is discussed further below, the exemplary assembly comprises various tee fittings and a four-way fitting which (for illustration purposes) are shown butted to associated piping/tubing. However, joints other than butt joints will typically be used in accordance with the types of fittings involved. The exemplary assembly includes a central four-way fitting 120. The fitting 120 has a first pair of ports 122A and 122B coaxial and at opposite ends along an axis 520. Similarly, the fitting has a second pair of ports 124A and 124B coaxial and at opposite ends along an axis 522, which is normal to axis 520. The fitting has a center 526 at the intersection of the axes 520 and 522.

In the normal mode of system operation, the net refrigerant flow enters the port 122A and exits the port 124A. The port 122A is along a first conduit leg 130 whose interior defines a first flowpath leg 131. The leg 130 is fed from the first discharge conduit portion 28-1. The exemplary leg 130 has a closed end 132. The exemplary closed end 132 is formed by cap or plug 134 along one arm of a tee-fitting 136. The other arm of tee-fitting 136 is coupled to the port 122A via a pipe/tube segment 138. The leg of the tee-fitting 136 is joined to the discharge line portion 28-1. The tee-fitting leg thus defines an inlet port 140 along the first leg 130. The first flowpath leg 131 is shown having an effective length L₁. For purpose of reference, L₁ is measured between: (1) the intersection of the first flowpath leg 131 with the flowpath leg of the discharge line portion 28-1 at the center of the fitting 136; and (2) the intersection of the first flowpath leg 131 with the second flowpath leg 151 of a second conduit leg 150 at the center of the fitting 120.

The assembly includes a blind first branch 180 (and first flowpath branch 181) opposite the first leg 130. The exemplary first branch 180 is formed by a conduit 182 extending from a junction with the fitting port 122B. A piston 184 is mounted within the conduit 182 and has a front face 186. An effective length L₃ of the first flowpath branch 181 is measured between the piston face 186 and intersection of the first flowpath branch with the second flowpath leg 151 and a blind second flowpath branch 201 of a second branch conduit 200 (discussed below). At the distal end of the conduit 182, a piston actuation mechanism 187 is mounted. An exemplary actuation mechanism 187 includes a user-engagable external handle 188 and a screw 190. Rotation of the handle 188 in respective first and second directions respectively shifts the piston inward (to reduce the length L₃) and outward (to increase L₃). An exemplary mechanism 187 is derived from a conventional shutoff valve.

Similar to the association of the first branch with the first conduit, the second branch 200 is associated with the second conduit leg 150. The second flowpath leg 151 may have a length L₂. The second branch flowpath 201 has an effective length L₄. The second conduit leg 150 and the second branch 200 may otherwise be assembled of similar components to those defining the first conduit leg first branch. Thus, the exemplary conduit leg 150 has a closed end 152 at a cap or plug 154 along one arm of a tee fitting 156. The other arm has a tee fitting coupled to the port 124A by a pipe/tube segment 158. The leg of the tee fitting is joined to the discharge line portion 28-2. The tee fitting leg thus defines an outlet port 160 along the second leg. The second branch 200 is shown formed by a conduit 202 extending from a junction with the fitting port 124B. A piston 204 is mounted within the conduit and has a front face 206. An actuation mechanism 207 has a handle 208 and a screw 210.

By way of example, the assembly 100 may be used to cancel a first pulsation and a second pulsation. For example, the two pulsations may differ in characteristic wavelength. By way of example, the system may be used to cancel harmonics of a basic frequency. For example, the basic frequency is designated F and the sonic speed in the refrigerant flow is designated C. The first harmonic f₁ equals F; the second harmonic f₂ equals 2F; third harmonic f₃ equals 3F; the fourth harmonic f₄ equals 4F. A parameter L_{F;q} equals C/4F.

An exemplary set-up and tuning process starts with a baseline system as discussed above. The baseline may be an actual refrigeration system being remanufactured. Alternatively, the baseline may be a set of system parameters such as in a computer model and representing the properties of the main components such as the compressor and heat exchangers and their target operating conditions. Target wavelengths for cancelation may be determined in any of several ways. In one example, the properties are calculated by first determining the frequency of a pulse-generating event (e.g., if the opening of cylinders, it would typically be the number of cylinders multiplied by compressor operating speed). The wavelength would then be calculated based upon the frequency, the thermodynamic conditions of the refrigerant at the location of cancelation, the refrigerant properties, and flow rates. Alternatively, more direct measurements/sensing of pulsation may be made (e.g., via contact or remote microphone or other vibration sensor (e.g., including laser sensors which may be swept across various system components to determine locations and properties of various resonances)).

The target wavelengths may be used to determine values of L₁ and L₂. In a basic example, L₁ is selected to be equal to the first wavelength to be canceled and L₂ is chosen to be equal to the second wavelength to be canceled. However, empirical rules may be developed that allow fine tuning (e.g., in a certain type of situation with a certain type of refrigerant, a rule may be developed that either of these lengths should be a certain percentage greater or less than wavelength otherwise calculated for the target frequency). As noted above, stock components may be used to fabricate the cancelation system. In the exemplary system, the lengths L₁ and L₂ may be achieved by merely cutting appropriate pipe/tubing of the conduit legs 130 and 150 to length to form the pipes/tubes 138&158. With L₁ and L₂ determined, the corresponding lengths of the pipes/tubes of the branches may be determined based upon the known geometry of the pistons and actuators. For example, the lengths may be selected so that L₃ and L₄ are at their nominal targets when the actuator is exactly in the middle of its range of motion (or at some other predetermined fraction of the range of motion). Assembly techniques may be those appropriate to the particular components being used (e.g., welding/brazing of fittings, clamping, and the like). As noted above, the reengineering may cause the refrigerant to be rerouted at a series of right angles to the original path.

In the exemplary tuning of four harmonics, the nominal values of L₁ and L₃ may initially be chosen as one quarter of L_{F;q}. Similarly, L₄ is chosen as one third of L_{F;q} and L₂ is chosen as two thirds of L_{F;q}. In such a situation, the leg 130 and branch 180 combine to compensate for f₂ (e.g., their combined length provides the compensation). As so far discussed, the terminal lengths L₅ and L₆ in the fittings are assumed small and their presence may influence the total effect on cancelation of such harmonic. Similarly, the leg 150 and branch 200 compensate for f₁. The branch 180 (via its length L₃) compensates for f₄. The branch 200 (via its length L₄) compensates for f₃.

It may be possible to select values of L₅ and L₆ to cancel fifth and sixth harmonics. This may slightly affect nominal size and tuning of the other legs and branches.

Tuning may be performed as an iterative process at one or more target operating conditions. At a given target operating condition, pulsation may be measured (e.g., as discussed above). The user may adjust the position of the piston and repeat to minimize the pulsation sought to be canceled. The minimization may be for a single operating condition or may represent a compromised minimization across a plurality of operating conditions.

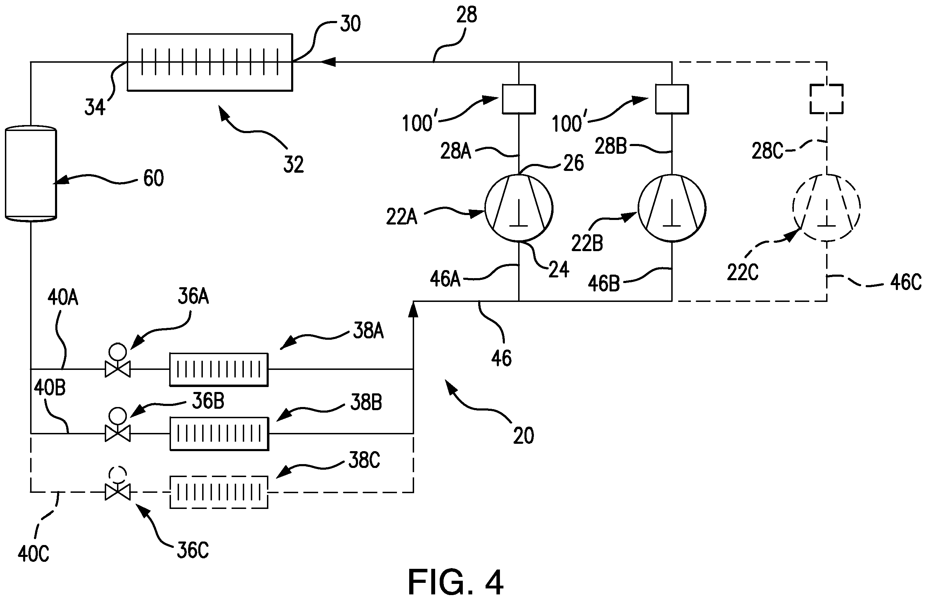

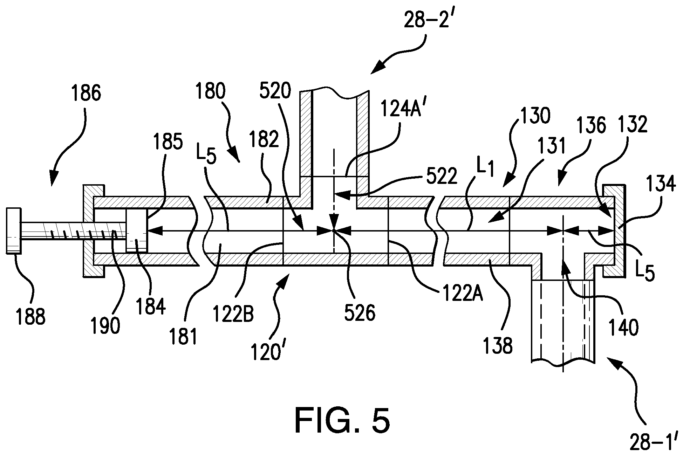

Among possible variations are the elimination of one of the branches or the addition of yet further branches. Also, such devices could be installed in series. For example, FIG. 4 shows systems 100' respectively associated with individual compressors. FIG. 5 shows each of these as a single-branch system. Reference numerals associated with the first conduit and first branch are repeated relative to FIG. 3. In this embodiment, however, the fitting 120 is replaced by a tee fitting 120' (FIG. 5). In use, the port 140 may be either an inlet or an outlet. The leg 124' of the tee fitting 120' would then, respectively, be the outlet or inlet. In such a system, the second conduit leg would be represented by the discharge line segment 28-1'.

It will be understood that various modifications may be made without departing from the scope of the disclosure. For example, when implemented in the remanufacturing of an existing system or the reengineering of an existing system configuration, details of the existing configuration may influence or dictate details of any particular implementation. Although shown as a planar schematic, various orthogonalities appropriate to provide the resonators may be associated with having flowpath leg axes extending in three different coordinate directions. Although shown using fittings having ports at right angles to each other, other angles may be used (potentially at the expense of needing non-standard fittings). By using angles off 90°, further flexibility in tuning may be achieved. Yet additional variations may be achieved by providing the pistons with faces other than planar. Such surfacing might include small-scale surfacing (e.g., to achieve a diffusing effect) or large scale features (e.g., a convexity or concavity to achieve a concentrating or focusing effect). Accordingly, other embodiments are within the scope of the following claims.

## Claims

1. A refrigeration system comprising:
a compressor (22A-22C);
a first heat exchanger (32) downstream of the compressor along a refrigerant flowpath;
an expansion device (36A-36C) downstream of the first heat exchanger along the refrigerant flowpath;
a second heat exchanger (38A-38C) downstream of the expansion device along the refrigerant flowpath and upstream of the compressor along the refrigerant flowpath; and
a pulsation-canceling conduit assembly (100; 100') comprising:
a first conduit leg (130);
a second conduit leg (150; 28-1') extending from a junction with the first conduit leg;
a first branch (180) extending from the junction opposite the first conduit leg; and
a first member (184) adjustably axially displaceable along the first branch to define an effective volume of the first branch;
**characterised in that** the first member is axially displaceable along the first branch via a screw mechanism (187) including an external actuator handle (188) so that rotation of the handle in first and second rotational directions respectively decreases and increases the effective volume.

2. The refrigeration system of claim 1 wherein:
the first conduit leg has a port (140) distally of the junction and at a right angle to a length of the first conduit leg.

3. The refrigeration system of claim 1 wherein:
the first conduit leg has a length 150-250% of a nominal length of the first branch.

4. The refrigeration system of claim 1 further comprising:
a second branch (200) extending from the junction opposite the second conduit; and
a second member (204) axially displaceable within the second branch to define an effective volume of the second branch.

5. The refrigeration system of claim 4 wherein:
the first branch and first conduit are coaxial; and
the second branch and second conduit are coaxial.

6. The refrigeration system of claim 4 wherein:
the first branch and second branch are at a right angle to each other.

7. The refrigeration system of claim 4 wherein:
the first conduit leg has a port (140) distally of the junction and at a right angle to a length of the first conduit leg; and
the second conduit leg has a port (160) distally of the junction and at a right angle to a length of the second conduit leg.

8. The refrigeration system of claim 4 wherein:
the first conduit has an inlet upstream at a first end of and essentially normal to a length of a main portion of the first conduit; and
the second conduit has an outlet downstream at a first end of and essentially normal to a length of a main portion of the second conduit.

9. The refrigeration system of claim 1 wherein:
the first conduit has an inlet upstream at a first end of and essentially normal to a length of a main portion of the first conduit.

10. The system of claim 1 wherein:
the assembly is between the compressor and the first heat exchanger.

11. A method for operating the refrigeration system of claim 1 comprising:
operating the compressor to compress a refrigerant flow and drive the refrigerant flow along the refrigerant flowpath sequentially through the first heat exchanger, expansion device, and second heat exchanger, to return to the compressor;
measuring a pulsation parameter; and
adjusting a position of the first member so as to reduce the measured pulsation parameter.

12. The method of claim 11 wherein:
the assembly further comprises:
a second branch extending from the junction opposite the second conduit; and
a second member axially displaceable within the second branch to define an effective volume of the second branch; and
said adjusting comprises adjusting both said position of said first member and a position of said second member.

13. Use of the refrigeration system of claim 1 comprising:
passing a fluid sequentially through said first conduit, said junction, and said second conduit;
measuring a pulsation parameter; and
adjusting a position of the first member so as to reduce the measured pulsation parameter.

## Patentansprüche

1. Kälteanlage, umfassend:
einen Verdichter (22A-22C);
einen ersten Wärmetauscher (32) stromabwärts des Verdichters entlang eines Kältemittelströmungswegs;
ein Expansionsorgan (36A-36C) stromabwärts des ersten Wärmetauschers entlang des Kältemittelströmungswegs;
einen zweiten Wärmetauscher (38A-38C) stromabwärts des Expansionsorgans entlang des Kältemittelströmungswegs und stromaufwärts des Verdichters entlang des Kältemittelströmungswegs; und
eine pulsationsunterdrückende Leitungsanordnung (100; 100'), die Folgendes umfasst:
einen ersten Leitungsschenkel (130);
einen zweiten Leitungsschenkel (150; 28-1'), der sich von einer Verbindungsstelle mit dem ersten Leitungsschenkel aus erstreckt;
einen ersten Zweig (180), der sich von der Verbindungsstelle gegenüber dem ersten Leitungsschenkel aus erstreckt; und
ein erstes Element (184), das entlang des ersten Zweigs anpassbar axial verschiebbar ist, um ein effektives Volumen des ersten Zweigs zu definieren;
**dadurch gekennzeichnet, dass** das erste Element entlang des ersten Zweigs über einen Schraubenmechanismus (187) axial verschiebbar ist, der einen externen Betätigungsgriff (188) beinhaltet, so dass die Drehung des Griffs in der ersten und in der zweiten Drehrichtung das effektive Volumen verringert beziehungsweise erhöht.

2. Kälteanlage nach Anspruch 1, wobei:
der erste Leitungsschenkel eine Öffnung (140) distal der Verbindungsstelle und in einem rechten Winkel zu einer Länge des ersten Leitungsschenkels aufweist.

3. Kälteanlage nach Anspruch 1, wobei:
der erste Leitungsschenkel eine Länge von 150-250 % einer Nennlänge des ersten Zweigs aufweist.

4. Kälteanlage nach Anspruch 1, ferner umfassend:
einen zweiten Zweig (200), der sich von der Verbindungsstelle gegenüber der zweiten Leitung erstreckt; und
ein zweites Element (204), das innerhalb des zweiten Zweigs axial verschiebbar ist, um ein effektives Volumen des zweiten Zweigs zu definieren.

5. Kälteanlage nach Anspruch 4, wobei:
der erste Zweig und die erste Leitung koaxial sind; und
der zweite Zweig und die zweite Leitung koaxial sind.

6. Kälteanlage nach Anspruch 4, wobei:
der erste Zweig und der zweite Zweig in einem rechten Winkel zueinander stehen.

7. Kälteanlage nach Anspruch 4, wobei:
der erste Leitungsschenkel eine Öffnung (140) distal der Verbindungsstelle und in einem rechten Winkel zu einer Länge des ersten Leitungsschenkels aufweist; und
der zweite Leitungsschenkel eine Öffnung (160) distal der Verbindungsstelle und in einem rechten Winkel zu einer Länge des zweiten Leitungsschenkels aufweist.

8. Kälteanlage nach Anspruch 4, wobei:
die erste Leitung einen Einlass stromaufwärts an einem ersten Ende eines Hauptabschnitts der ersten Leitung und im Wesentlichen senkrecht zu dessen Länge aufweist; und
die zweite Leitung einen Auslass stromabwärts an einem ersten Ende eines Hauptabschnitts der zweiten Leitung und im Wesentlichen senkrecht zu dessen Länge aufweist.

9. Kälteanlage nach Anspruch 1, wobei:
die erste Leitung einen Einlass stromaufwärts an einem ersten Ende eines Hauptabschnitts der ersten Leitung und im Wesentlichen senkrecht zu dessen Länge aufweist.

10. Anlage nach Anspruch 1, wobei:
die Anordnung zwischen dem Verdichter und dem ersten Wärmetauscher liegt.

11. Verfahren zum Betreiben der Kälteanlage nach Anspruch 1, umfassend:
Betreiben des Verdichters, um einen Kältemittelstrom zu verdichten und den Kältemittelstrom entlang des Kältemittelströmungswegs der Reihe nach durch den ersten Wärmetauscher, das Expansionsorgan und den zweiten Wärmetauscher zu treiben, um zum Verdichter zurückzukehren;
Messen eines Pulsationsparameters; und
Anpassen einer Position des ersten Elements, um so den gemessenen Pulsationsparameter zu verringern.

12. Verfahren nach Anspruch 11, wobei:
die Anordnung ferner Folgendes umfasst:
einen zweiten Zweig, der sich von der Verbindungsstelle gegenüber der zweiten Leitung erstreckt; und
ein zweites Element, das innerhalb des zweiten Zweigs axial verschiebbar ist, um ein effektives Volumen des zweiten Zweigs zu definieren; und
wobei das Anpassen das Anpassen sowohl der Position des ersten Elements als auch einer Position des zweiten Elements umfasst.

13. Verwendung der Kälteanlage nach Anspruch 1, umfassend:
Leiten eines Fluids der Reihe nach durch die erste Leitung, die Verbindungsstelle und die zweite Leitung;
Messen eines Pulsationsparameters; und
Anpassen einer Position des ersten Elements, um so den gemessenen Pulsationsparameter zu verringern.

## Revendications

1. Système de réfrigération comprenant :
un compresseur (22A-22C) ;
un premier échangeur de chaleur (32) en aval du compresseur le long d'un trajet d'écoulement de réfrigérant ;
un dispositif de détente (36A-36C) en aval du premier échangeur de chaleur le long du trajet d'écoulement de réfrigérant ;
un second échangeur de chaleur (38A-38C) en aval du dispositif de détente le long du trajet d'écoulement de réfrigérant et en amont du compresseur le long du trajet d'écoulement de réfrigérant ; et
un ensemble de conduits de suppression des impulsions (100 ; 100') comprenant :
un premier bras de conduit (130) ;
un second bras de conduit (150 ; 28-1') s'étendant depuis une jonction avec le premier bras de conduit ;
une première branche (180) s'étendant depuis la jonction opposée au premier bras de conduit ; et
un premier élément (184) pouvant être déplacé axialement de manière réglable le long de la première branche pour définir un volume effectif de la première branche ;
**caractérisé en ce que** le premier élément peut être déplacé axialement le long de la première branche via un mécanisme à vis (187) comprenant une poignée d'actionneur externe (188) de sorte qu'une rotation de la poignée dans des premier et second sens de rotation diminue et augmente respectivement le volume effectif.

2. Système de réfrigération selon la revendication 1, dans lequel :
le premier bras de conduit comporte un orifice (140) éloigné de la jonction et perpendiculaire à une longueur du premier bras de conduit.

3. Système de réfrigération selon la revendication 1, dans lequel :
le premier bras de conduit présente une longueur de 150 à 250 % d'une longueur nominale de la première branche.

4. Système de réfrigération selon la revendication 1, comprenant en outre :
une seconde branche (200) s'étendant depuis la jonction opposée au second conduit ; et
un second élément (204) pouvant être déplacé axialement dans la seconde branche pour définir un volume effectif de la seconde branche.

5. Système de réfrigération selon la revendication 4, dans lequel :
la première branche et le premier conduit sont coaxiaux ; et
la seconde branche et le second conduit sont coaxiaux.

6. Système de réfrigération selon la revendication 4, dans lequel :
les première et seconde branches sont perpendiculaires l'une par rapport à l'autre.

7. Système de réfrigération selon la revendication 4, dans lequel :
le premier bras de conduit comporte un orifice (140) éloigné de la jonction et perpendiculaire à une longueur du premier bras de conduit ; et
le second bras de conduit comporte un orifice (160) éloigné de la jonction et perpendiculaire à une longueur du second bras de conduit.

8. Système de réfrigération selon la revendication 4, dans lequel :
le premier conduit présente une entrée en amont à une première extrémité d'une longueur d'une partie principale du premier conduit et sensiblement normale à celle-ci ; et
le second conduit présente une sortie en aval à une première extrémité d'une longueur d'une partie principale du second conduit et sensiblement normale à celle-ci.

9. Système de réfrigération selon la revendication 1, dans lequel :
le premier conduit présente une entrée en amont à une première extrémité d'une longueur d'une partie principale du premier conduit et sensiblement normale à celle-ci.

10. Système selon la revendication 1, dans lequel :
l'ensemble se situe entre le compresseur et le premier échangeur de chaleur.

11. Procédé de fonctionnement du système de réfrigération selon la revendication 1, comprenant :
le fonctionnement du compresseur pour comprimer un écoulement de réfrigérant et entraîner l'écoulement de réfrigérant le long du trajet d'écoulement de réfrigérant séquentiellement à travers le premier échangeur de chaleur, le dispositif de détente et le second échangeur de chaleur, pour revenir au compresseur ;
la mesure d'un paramètre d'impulsions ; et
le réglage d'une position du premier élément afin de réduire le paramètre d'impulsions mesuré.

12. Procédé de la revendication 11, dans lequel :
l'ensemble comprend en outre :
une seconde branche s'étendant depuis la jonction opposée au second conduit ; et
un second élément pouvant être déplacé axialement dans la seconde branche pour définir un volume effectif de la seconde branche ; et
ledit réglage comprend le réglage à la fois de ladite position dudit premier élément et d'une position dudit second élément.

13. Utilisation du système de réfrigération selon la revendication 1 comprenant :
le passage d'un fluide de manière séquentielle à travers ledit premier conduit, ladite jonction et ledit second conduit ;
la mesure d'un paramètre d'impulsions ; et
le réglage d'une position du premier élément afin de réduire le paramètre d'impulsions mesuré.
